# EUROPEAN PATENT SPECIFICATION

(11) **EP 4 475 266 B1**
(45) Date of publication and mention of the grant of the patent: **02.12.2026**
(21) Application number: 23799743.2
(22) Date of filing: 08.05.2023
(51) Int. Cl.: H01M 10/42, H01M 10/48, H01M 50/502, H01M 50/574, H01M 50/251

(54) **ENERGY STORAGE SYSTEM WITH ENHANCED SAFETY**
ENERGIESPEICHERSYSTEM MIT ERHÖHTER SICHERHEIT
SYSTÈME DE STOCKAGE D'ÉNERGIE À SÉCURITÉ AMÉLIORÉE

(30) Priority: 06.05.2022 KR 20220055929
(43) Date of publication of application: 11.12.2024
(73) Proprietor: LG Energy Solution, Ltd., Seoul 07335 (KR)
(72) Inventor: KIM, Yo-Hwan, Daejeon 34122 (KR); KIM, Ji-Hun, Daejeon 34122 (KR); PARK, Hong-Jae, Daejeon 34122 (KR); YANG, Mun-Seok, Daejeon 34122 (KR); YOON, Sung-Han, Daejeon 34122 (KR); LEE, Seung-Jun, Daejeon 34122 (KR); LEE, Ji-Won, Daejeon 34122 (KR); LEE, Hyun-Min, Daejeon 34122 (KR); LEE, Hyung-Uk, Daejeon 34122 (KR); CHO, Tae-Shin, Daejeon 34122 (KR)
(74) Representative: Plasseraud IP
(86) International application number: PCT/KR2023/006222
(87) International publication number: WO 2023/214862

(56) References cited:
- JP-A- 2015 175 232
- KR-A- 20050 012 909
- KR-A- 20140 094 885
- KR-A- 20190 020 433
- KR-A- 20190 063 889
- KR-B1- 102 035 031
- US-A1- 2014 097 797

## Description

### TECHNICAL FIELD

The present application claims priority to Korean Patent Application No. 10-2022-0055929 filed on May 6, 2022 in the Republic of Korea.

The present disclosure relates to an energy storage system (ESS), and more particularly, to an energy storage system with enhanced safety.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

An energy storage system using such a battery may be a device that stores a large amount of power and provides the stored power to a plurality of load facilities. For example, an energy storage system is used in the form of an industrial, building, or household energy management system, and is used as a regular power grid and/or an emergency power grid by providing stored power to load facilities at each point of use.

Conventionally, maintenance work was performed after a worker cut off power by manipulating the cut-off switch of the energy storage system. In this maintenance process, there is a problem that human injury may occur due to the operator's negligence or malfunction of the cut-off switch. Therefore, in order to improve the safety of workers, a technology capable of automatically controlling the shut-off switch in a maintenance situation is required.

KR102035031B1 discloses an apparatus and method for door opening protection of energy storage system. US2014097797A1 discloses an energy storage system.

### DISCLOSURE

### Technical Problem

The present disclosure is designed to solve the problems of the related art, and therefore the present disclosure is directed to providing an energy storage system with enhanced safety, which may control a shut-off switch for the safety of workers.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The invention is defined by the appended claims.

### Advantageous Effects

According to one aspect of the present disclosure, since the battery container can be shut down depending on whether a door included in the battery container is opened, there is an advantage in inducing a worker to safely work on the battery container.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing an energy storage system according to an embodiment of the present disclosure.
FIG. 2 is a perspective view of an energy storage system according to an embodiment of the present disclosure.
FIG. 3 is a diagram schematically showing a control container according to an embodiment of the present disclosure.
FIG. 4 is a diagram schematically showing a battery container according to an embodiment of the present disclosure.
FIG. 5 is a diagram schematically showing an exemplary configuration of an energy storage system according to an embodiment of the present disclosure.
FIGS. 6 and 7 are diagrams schematically showing exemplary configurations of a sub control unit and a sensing unit according to an embodiment of the present disclosure.
FIG. 8 is a diagram schematically showing an exemplary configuration of an energy storage system according to another embodiment of the present disclosure.
FIG. 9 is a diagram schematically showing an exemplary configuration of an energy storage system according to still another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, preferred embodiments of the present disclosure will be described in detail with reference to the accompanying drawings.

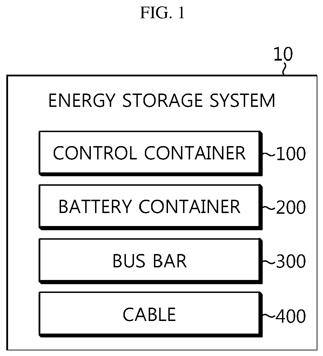

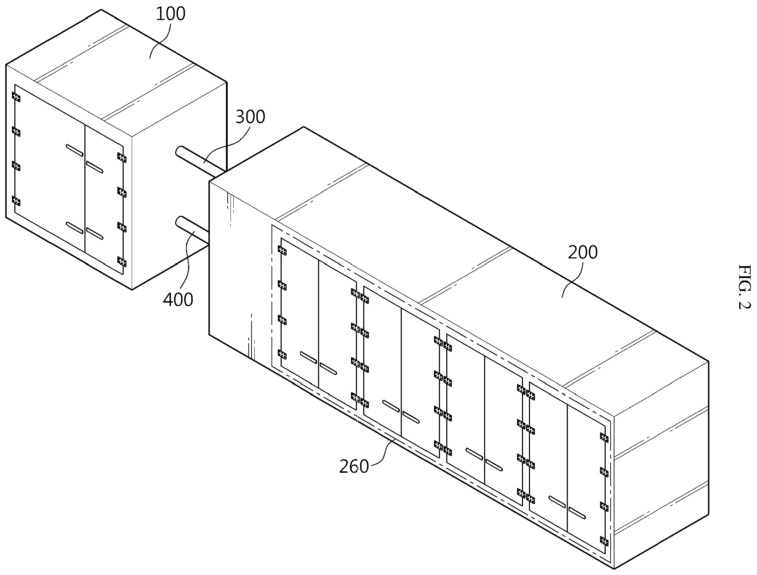

FIG. 1 is a diagram schematically showing an energy storage system 10 according to an embodiment of the present disclosure. FIG. 2 is a perspective view of an energy storage system 10 according to an embodiment of the present disclosure.

Referring to FIG. 1, an energy storage system 10 includes a control container 100 and a battery container 200.

The control container 100 and the battery container 200 are electrically and communicatively connected. The control container 100 may be expressed as E-LINK, and the battery container 200 may be expressed as B-LINK.

In addition, the energy storage system 10 may further include an injection container (not shown). The injection container is controlled by the control container 100 and/or the battery container 200, and when a fire occurs in the battery container 200, the injection container may inject a fire extinguishing liquid (e.g., water) to the battery container 200.

Specifically, the control container 100 may be connected to a power conversion system (PCS) to supply power to internal components of the control container 100 and the battery container 200. In addition, the control container 100 may include a monitoring unit (not shown) capable of comprehensively monitoring the energy storage system 10.

The battery container 200 may include a plurality of battery racks in which battery modules are loaded, a fire suppression unit (e.g., an air conditioning unit, a fire extinguishing unit, and a ventilation unit), and the like. The battery container 200 may form a power line and a communication line with the control container 100.

For example, in the embodiment of FIG. 2, the energy storage system 10 includes a control container 100 and a battery container 200. Also, since the control container 100 and the battery container 200 are connected to each other by wire, a power line and a communication line may be formed between the control container 100 and the battery container 200.

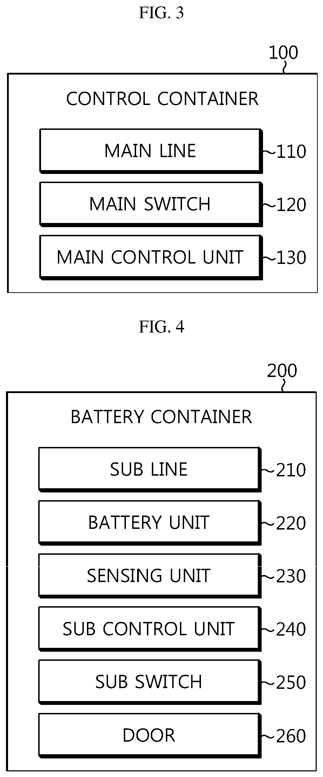

FIG. 3 is a diagram schematically showing a control container 100 according to an embodiment of the present disclosure.

Referring to FIG. 3, the control container 100 includes a main line 110, a main switch 120, and a main control unit 130.

The main line 110 may be a power line included in the control container 100. For example, the main line 110 may be a direct current line (DC line).

The main switch 120 may be configured to be connected to the main line 110. For example, the main switch 120 may be connected in series to the main line 110.

The main control unit 130 may be configured to control the operation state of the main switch 120.

Specifically, the main control unit 130 is configured to control the operation state of the main switch 120 to a turn-on state or a turn-off state. For example, when the operation state of the main switch 120 is a turn-on state, the main line 110 may be electrically connected. Conversely, when the operation state of the main switch 120 is a turn-off state, the main line 110 may be electrically cut off.

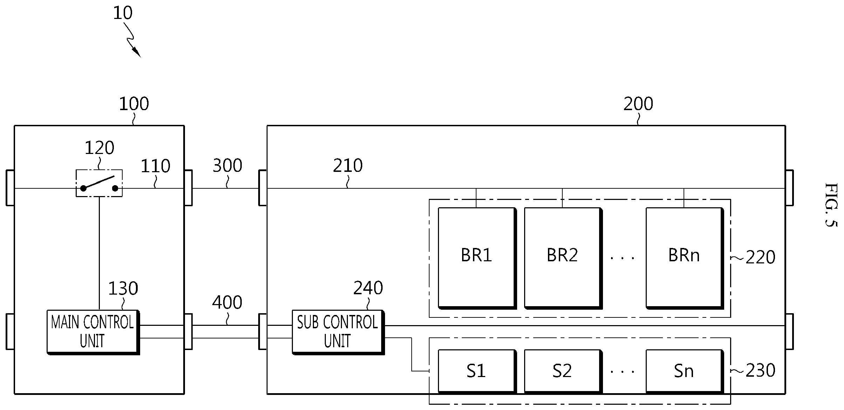

FIG. 4 is a diagram schematically showing a battery container 200 according to an embodiment of the present disclosure. FIG. 5 is a diagram schematically showing an exemplary configuration of an energy storage system 10 according to an embodiment of the present disclosure.

Referring to FIG. 4, the battery container 200 includes a sub line 210, a battery unit 220, a sensing unit 230, and a sub control unit 240.

The sub line 210 may be configured to be electrically connected to the main line 110.

Specifically, the sub line 210 may be a power line, identical to the main line 110. For example, like the main line 110, the sub line 210 may be a DC line. As the control container 100 and the battery container 200 are electrically connected, the sub line 210 may be electrically connected to the main line 110.

For example, in the embodiment of FIG. 5, the main line 110 and the sub line 210 may be electrically connected.

The battery unit 220 may be configured to be connected to the sub line 210. Specifically, the battery unit 220 may include a plurality of battery racks BR1 to BRn, and each battery rack BR1 to BRn may include a plurality of battery modules.

For example, the battery unit 220 may include a plurality of battery racks BR1 to BRn. In the embodiment of FIG. 5, the battery unit 220 may include a first battery rack BR1, a second battery rack BR2, and an n-th battery rack BRn. Here, n is a natural number greater than or equal to 2, and may be determined based on various factors such as the size of the battery container 200 and the allowable capacity of the energy storage system 10.

The sensing unit 230 may be configured to detect whether the door 260 provided in the battery container 200 is opened or closed.

Specifically, the sensing unit 230 is configured to of detect whether the door 260 provided in the battery container 200 is opened or closed. For example, the sensing unit 230 may be a magnetic sensor, a piezoelectric sensor, or an optical sensor capable of detecting whether the door 260 is opened or closed.

For example, the sensing unit 230 may include a plurality of sensing units S1 to Sn. In the embodiment of FIG. 5, the sensing unit 230 may include a first sensing unit S1, a second sensing unit S2, and an n-th sensing unit Sn.

Preferably, the battery container 200 may be configured to have a plurality of doors 260. Also, the sensing unit 230 may be configured to detect whether each of the plurality of doors 260 is opened or closed. In general, the battery container 200 may include a number of doors 260 corresponding to the number of battery racks in order for a worker to perform work (e.g., maintenance) on each battery rack. That is, after opening the door 260 corresponding to the battery rack for work, the worker may proceed with the work on the corresponding battery rack. Accordingly, in the embodiment of FIG. 5, the battery container 200 may include the n number of doors 260 corresponding to the n number of battery racks. Also, the sensing unit 230 may include the n number of sensing units S1 to Sn corresponding to the n number of doors 260.

The sub control unit 240 may be connected to the sensing unit 230 to enable communication. Also, the sub control unit 240 may be configured to determine the opened/closed state of the door 260 based on the sensing signal received from the sensing unit 230.

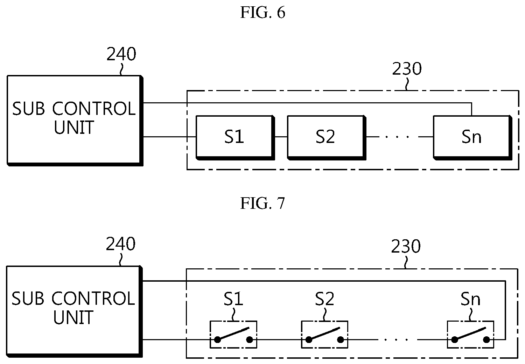

FIGS. 6 and 7 are diagrams schematically showing exemplary configurations of a sub control unit 240 and a sensing unit 230 according to an embodiment of the present disclosure.

The sub control unit 240 may be connected to the sensing units S1 to Sn included in the sensing unit 230 to form a closed circuit. For example, in the embodiment of FIG. 6, the sub control unit 240 may be connected to the first sensing unit S1, and the first sensing unit S1 may be connected to the second sensing unit S2. Also, the n-th sensing unit Sn may be connected to the sub control unit 240. Accordingly, the closed circuit connecting the sub control unit 240, the first sensing unit S1, the second sensing unit S2, and the n-th sensing unit Sn may be formed. However, it should be noted that in the closed circuit of FIG. 6, resistance elements and the like are omitted for convenience of description.

For example, the sensing units S1 to Sn may be magnetic sensors. That is, each of the sensing units S1 to Sn may include a first magnetic unit and a second magnetic unit. When the door 260 is open, since the first magnetic unit and the second magnetic unit are separated, the operation state of the sensing unit may be a turn-off state. Conversely, when the door 260 is closed, since the first magnetic unit and the second magnetic unit are connected, the operation state of the sensing unit may be a turn-on state.

Referring to FIG. 7, when all of the n number of doors 260 are closed, the operation states of the n number of sensing units S1 to Sn may all be turn-on states. In this case, a closed circuit connecting the sub control unit 240 and the sensing unit 230 may be electrically connected. Accordingly, the sub control unit 240 may determine the opened/closed state of the door 260 provided in the battery container 200 by detecting whether a closed circuit is connected.

The sub control unit 240 may be configured to transmit the determined opened/closed state to the main control unit 130.

Specifically, the sub control unit 240 may transmit opened/closed state information indicating an opened state or a closed state to the main control unit 130.

When the door 260 is in an opened state, the main control unit 130 may be configured to block the connection between the main line 110 and the sub line 210 by controlling the operation state of the main switch 120 to a turn-off state. Conversely, when the door 260 is in a closed state, the main control unit 130 may be configured to connect the main line 110 and the sub line 210 by controlling the operation state of the main switch 120 to a turn-on state.

Specifically, one end of the main switch 120 may be connected to the sub line 210 through the main line 110. Also, the other end of the main switch 120 may be connected to a PCS (not shown) through the main line 110.

For example, when the operation state of the main switch 120 is controlled to a turn-off state, the connections between the PCS and the control container 100 and the battery container 200 may be cut off. Therefore, the electrical connection between the main line 110 and the sub line 210 may be cut off.

As another example, when the operation state of the main switch 120 is controlled as a turn-on state, the PCS, the control container 100, and the battery container 200 may be electrically connected. Therefore, the main line 110 and the sub line 210 may be electrically connected.

In particular, the main control unit 130 may be configured to control the operation state of the main switch 120 to a turn-off state, when at least one of the plurality of doors 260 is in an opened state.

Specifically, when at least one door 260 of the plurality of doors 260 included in the battery container 200 is open, the sub control unit 240 may transmit the opened/closed state information indicating the opened state to the main control unit 130. Upon receiving the opened/closed state information indicating the opened state, the main control unit 130 may block the connection between the main line 110 and the sub line 210 by controlling the operation state of the main switch 120 to a turn-off state. Accordingly, when all doors 260 provided in the battery container 200 are closed, the operation state of the main switch 120 is controlled to a turn-on state, and the main line 110 and the sub line 210 may be electrically connected.

The energy storage system 10 according to an embodiment of the present disclosure may cut off power of the battery container 200 depending on whether the door 260 provided in the battery container 200 is opened or closed. That is, even if the worker does not directly control the operation state of the main switch 120 to a turn-off state, power to the battery container 200 may be cut off at the moment the door 260 is opened. Therefore, since the battery container 200 is in an electrically safe state, the safety of workers can be enhanced. Due to this, there is an advantage in that human accidents due to carelessness of the worker can be prevented in advance.

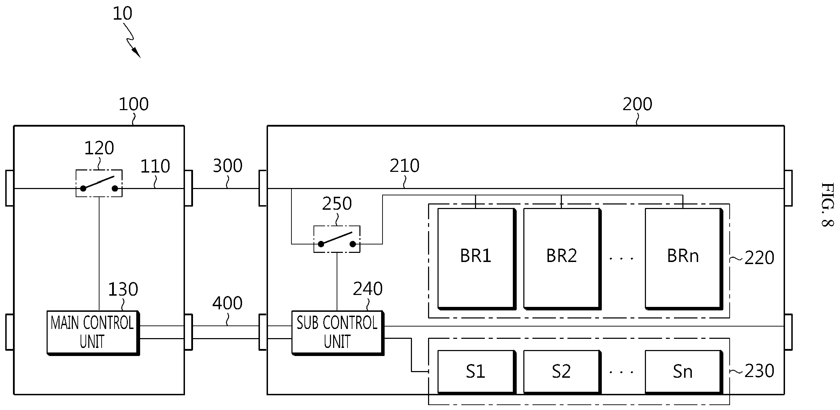

FIG. 8 is a diagram schematically showing an exemplary configuration of an energy storage system 10 according to another embodiment of the present disclosure.

Referring to FIGS. 1 and 8, the battery container 200 may further include a sub switch 250.

The sub switch 250 may be configured to be connected between the sub line 210 and the battery unit 220.

Specifically, the sub switch 250 may have one end connected to the sub line 210 and the other end connected to the battery unit 220. A line connected to the other end of the sub switch 250 may be connected to each of the plurality of battery racks BR1 to BRn included in the battery unit 220. That is, the sub switch 250 may be connected to a common line connecting the sub line 210 and the plurality of battery racks BR1 to BRn.

For example, in the embodiment of FIG. 8, the sub switch 250 may be connected between the sub line 210 and the battery unit 220. Depending on the operation state of the sub switch 250, the sub line 210 and the battery unit 220 may be electrically connected or disconnected.

The sub switch 250 may be configured such that the operation state thereof is controlled by the sub control unit 240.

Specifically, the sub control unit 240 may be configured to control the operation state of the sub switch 250 based on the determined opened/closed state. For example, the sub control unit 240 may control the operation state of the sub switch 250 to a turn-on state or a turn-off state based on the determined opened/closed state.

For example, the sub control unit 240 may be configured to block the connection between the sub line 210 and the battery unit 220 by controlling the operation state of the sub switch 250 to a turn-off state when the door 260 is in an opened state. Conversely, the sub control unit 240 may be configured to connect the sub line 210 and the battery unit 220 by controlling the operation state of the sub switch 250 to a turn-on state when the door 260 is in a closed state.

That is, the sub control unit 240 may determine whether the door 260 provided in the battery container 200 is opened or closed through the sensing unit 230, and when the door 260 is in an opened state, the sub control unit 240 may cut off the electrical connection between the sub line 210 and the battery unit 220.

In the energy storage system 10 according to an embodiment of the present disclosure, when the door 260 of the battery container 200 is opened, the main switch 120 included in the control container 100 and/or the sub switch 250 included in the battery container 200 can be controlled to a turn-off state to enhance the safety of workers.

In particular, even if the operation state of the main switch 120 is not controlled to a turn-off state due to carelessness of the worker or malfunction, the operation state of the sub switch 250 is controlled to a turn-off state, so safety for the worker can be further enhanced.

Further referring to FIG. 1, the energy storage system 10 may further include a bus bar 300 and a cable 400.

The bus bar 300 may be configured to electrically connect the control container 100 and the battery container 200 by connecting one end and the other end to the main line 110 and the sub line 210, respectively.

For example, in the embodiments of FIGS. 2, 5 and 8, the bus bar 300 may be connected between the control container 100 and the battery container 200. In particular, one end of the bus bar 300 may be connected to the main line 110 of the control container 100, and the other end of the bus bar 300 may be connected to the sub line 210 of the battery container 200. Accordingly, a power line including the main line 110, the bus bar 300, and the sub line 210 may be formed.

One end and the other end of the cable 400 may be connected to the main control unit 130 and the sub control unit 240, respectively, so that the main control unit 130 and the sub control unit 240 can communicate with each other.

For example, in the embodiments of FIGS. 2, 5 and 8, the cable 400 may be connected between the control container 100 and the battery container 200. In particular, one end of the cable 400 may be connected to the main control unit 130 of the control container 100, and the other end of the cable 400 may be connected to the sub control unit 240 of the battery container 200. Accordingly, a communication line including the main control unit 130, the cable 400, and the sub control unit 240 may be formed.

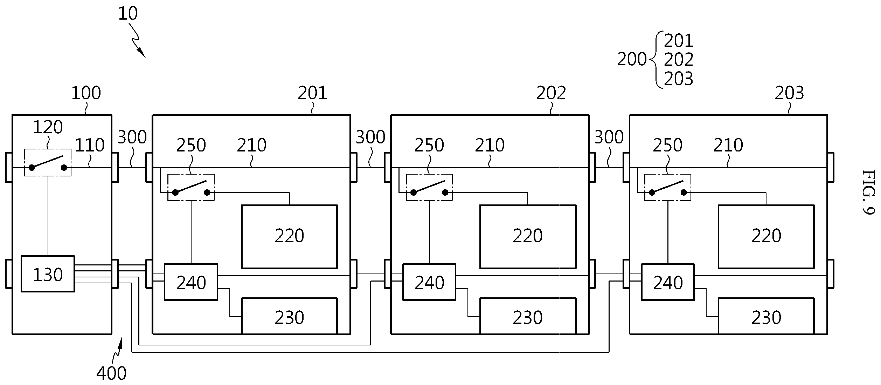

FIG. 9 is a diagram schematically showing an exemplary configuration of an energy storage system 10 according to still another embodiment of the present disclosure.

The battery container 200 may be provided in plurality. Specifically, when a plurality of battery container 200 is provided, the main line 110 and a plurality of sub line 210 may form one power line by connecting the sub lines 210 in series.

In the embodiment of FIG. 9, a first battery container 201, a second battery container 202, and a third battery container 203 may be included in the energy storage system 10. The control container 100 and the plurality of battery containers 200 may be electrically connected through the bus bar 300. For example, the main line 110 of the control container 100 and the sub lines 210 of the first to third battery containers 201, 202, 203 may form one power line.

Also, in the embodiment of FIG. 9, the control container 100 and the plurality of battery containers 200 may be communicatively connected through the cable 400. Preferably, a communication line between the control container 100 and the plurality of battery containers 200 may be formed in a home-run method and a daisy chain method. For example, according to the home-run method, the control container 100 may be communicatively connected to the first to third battery containers 201, 202, 203, respectively. Also, according to the daisy chain method, the control container 100 may be connected to the first battery container 201, the first battery container 201 may be connected to the second battery container 202, and the second battery container 202 may be connected to the third battery container 203.

In the embodiment of FIG. 9, it has been described that the energy storage system 10 includes three battery containers 200, but more battery containers 200 may be connected through a bus bar 300 and a cable 400. That is, the structure of the battery container 200 is an expandable modular structure. Accordingly, the number of battery containers 200 included in the energy storage system 10 can be easily expanded through connection members (e.g., bus bars and cables).

For example, the main control unit 130 may be configured to control the operation state of the main switch 120 to a turn-off state when the door 260 of at least one of the plurality of battery containers 200 is in an opened state. In the embodiment of FIG. 9, when at least one of all doors 260 included in the first to third battery containers 201, 202, 203 is opened, the main control unit 130 may control the operation state of the main switch 120 to a turn-off state. In this case, the power line formed by the control container 100 and the first to third battery containers 201, 202, 203 is released, so that the first to third battery containers 201, 202, 203 may be shut down. Therefore, the worker can safely work on the battery container 200.

As another example, when the door 260 of at least one of the plurality of battery container 200 is in the opened state, the operation state of the main switch 120 is not controlled by the main control unit 130, and the operation state of the sub switch 250 may be controlled by the sub control unit 240 in each of the plurality of battery container 200. The sub control unit 240 may be configured to control the operation state of the corresponding sub switch 250 to a turn-off state when the door 260 is in an opened state. In the embodiment of FIG. 9, it is assumed that all of the doors 260 included in the first battery container 201 and the third battery container 203 are in a closed state, and at least one of the doors 260 included in the second battery container 202 is in an opened state. The sub control unit 240 included in the second battery container 202 may control the operation state of the corresponding sub switch 250 to a turn-off state. In this case, the electrical connections between the control container 100, the first battery container 201, and the third battery container 203 may be maintained, and only the second battery container 202 may be in a shutdown state. Accordingly, the work can safely work on the second battery container 202 without shutting down all of the plurality of battery containers 200.

As still another example, when the door 260 of at least one of the plurality of battery containers 200 is in an opened state, the main control unit 130 may control the operation state of the main switch 120 to a turn-off state. In addition, the sub control unit 240 included in the battery container 200 in which the door 260 is opened may control the operation state of the corresponding sub switch 250 to a turn-off state. As in the previous embodiment, in the embodiment of FIG. 9, it is assumed that all of the doors 260 included in the first battery container 201 and the third battery container 203 are in a closed state, and at least one of the doors 260 included in the second battery container 202 is in an opened state. Since at least one door 260 among the doors 260 included in the plurality of battery containers 200 is open, the main control unit 130 can control the operation state of the main switch 120 to a turn-off state. In addition, the sub control unit 240 included in the second battery container 202 may control the operation state of the corresponding sub switch 250 to a turn-off state. That is, since both the main switch 120 and the sub switch 250 are controlled in a turn-off state, power to the second battery container 202 can be completely cut off. Thus, safety for the worker can be further enhanced.

Meanwhile, the main control unit 130 and the sub control unit 240 may selectively include processors known in the art, application-specific integrated circuit (ASIC), other chipsets, logic circuits, registers, communication modems, data processing devices, and the like to execute various control logic performed in the present disclosure. Also, when the control logic is implemented in software, the main control unit 130 and the sub control unit 240 may be implemented as a set of program modules. At this time, the program module may be stored in a memory (not shown) and executed by the main control unit 130 and the sub control unit 240. Here, the memory is not particularly limited in its type as long as it is a known information storage means that can record, erase, update and read data. As an example, the information storage means may include RAM, flash memory, ROM, EEPROM, registers, and the like.

### (Reference Signs)

10: energy storage system
100: control container
110: main line
120: main switch
130: main control unit
200: battery container
210: sub line
220: battery unit
230: sensing unit
240: sub control unit
250: sub switch
260: door
300: bus bar
400: cable

## Claims

1. An energy storage system (10) with enhanced safety, comprising:
a control container (100) including a main line (110); a main switch (120) configured to be connected to the main line; and a main control unit (130) configured to control the operation state of the main switch; and
a battery container (200) including a sub line (210) configured to be electrically connected with the main line; a battery unit (220) configured to be connected to the sub line; a door (260); a sensing unit (230) configured to detect whether the door (260) is opened or closed;
and a sub control unit (240) configured to determine an opened/closed state of the door based on a sensing signal received from the sensing unit and transmit the determined opened/closed state to the main control unit,
wherein the main control unit is configured to control the operation state of the main switch based on the determined opened/closed state of the door.

2. The energy storage system with enhanced safety according to claim 1,
wherein the main control unit is configured to:
block the connection between the main line and the sub line by controlling the operation state of the main switch to a turn-off state, when the door is in the opened state, and
connect the main line and the sub line by controlling the operation state of the main switch to a turn-on state, when the door is in the closed state.

3. The energy storage system with enhanced safety according to claim 2,
wherein the battery container is configured to have a plurality of doors, and
wherein the sensing unit is configured to detect whether each of the plurality of doors is opened or closed.

4. The energy storage system with enhanced safety according to claim 3,
wherein the main control unit is configured to control the operation state of the main switch to a turn-off state, when at least one of the plurality of doors is in the opened state.

5. The energy storage system with enhanced safety according to claim 2,
wherein when the battery container is provided in plurality, the main line and a plurality of sub lines are configured to form one power line by connecting the sub lines in series, and
wherein the main control unit is configured to control the operation state of the main switch to a turn-off state, when the door of at least one of the plurality of battery containers is in an opened state.

6. The energy storage system with enhanced safety according to any one of claims 1 to 5,
wherein the battery container further includes a sub switch (250) connected between the sub line and the battery unit and configured such that the operation state thereof is controlled by the sub control unit.

7. The energy storage system with enhanced safety according to claim 6,
wherein the sub control unit is configured to control the operation state of the sub switch based on the determined opened/closed state.

8. The energy storage system with enhanced safety according to claim 7,
wherein the sub control unit is configured to:
block the connection between the sub line and the battery unit by controlling the operation state of the sub switch to a turn-off state, when the door is in the opened state, and
connect the sub line and the battery unit by controlling the operation state of the sub switch to a turn-on state, when the door is in the closed state.

9. The energy storage system with enhanced safety according to claim 1, further comprising:
a bus bar (300) having one end and the other end connected to the main line and the sub line, respectively, and configured to electrically connect the control container and the battery container.

10. The energy storage system with enhanced safety according to claim 1, further comprising:
a cable (400) having one end and the other end connected to the main control unit and the sub control unit, respectively, and configured to connect the main control unit and the sub control unit so that communication is possible.

## Patentansprüche

1. Energiespeichersystem (10) mit erhöhter Sicherheit, umfassend:
• einen Steuerbehälter (100), der eine Hauptleitung (110) enthält; einen Hauptschalter (120), der so konfiguriert ist, dass er mit der Hauptleitung verbunden ist; und eine Hauptsteuereinheit (130), die so konfiguriert ist, dass sie den Betriebszustand des Hauptschalters steuert; und
• einen Batteriebehälter (200), der eine Teilleitung (210) enthält, die so konfiguriert ist, dass sie elektrisch mit der Hauptleitung verbunden ist; eine Batterieeinheit (220), die so konfiguriert ist, dass sie mit der Teilleitung verbunden ist; eine Tür (260); eine Erfassungseinheit (230), die so konfiguriert ist, dass sie erfasst, ob die Tür (260) geöffnet oder geschlossen ist; und eine Untersteuereinheit (240), die so konfiguriert ist, dass sie einen geöffneten/geschlossenen Zustand der Tür basierend auf einem von der Erfassungseinheit empfangenen Erfassungssignal bestimmt und den bestimmten geöffneten/geschlossenen Zustand an die Hauptsteuereinheit überträgt,
wobei die Hauptsteuereinheit so konfiguriert ist, dass sie den Betriebszustand des Hauptschalters basierend auf dem bestimmten geöffneten/geschlossenen Zustand der Tür steuert.

2. Energiespeichersystem mit erhöhter Sicherheit nach Anspruch 1, wobei die Hauptsteuereinheit konfiguriert ist zum:
• Blockieren der Verbindung zwischen der Hauptleitung und der Teilleitung durch Steuern des Betriebszustands des Hauptschalters in einen Ausschaltzustand, wenn sich die Tür im geöffneten Zustand befindet, und
• Verbinden der Hauptleitung und der Teilleitung durch Steuern des Betriebszustands des Hauptschalters in einen Einschaltzustand, wenn sich die Tür im geschlossenen Zustand befindet.

3. Energiespeichersystem mit erhöhter Sicherheit nach Anspruch 2, wobei der Batteriebehälter so konfiguriert ist, dass er eine Vielzahl von Türen aufweist, und wobei die Erfassungseinheit so konfiguriert ist, dass sie erfasst, ob jede der Vielzahl von Türen geöffnet oder geschlossen ist.

4. Energiespeichersystem mit erhöhter Sicherheit nach Anspruch 3, wobei die Hauptsteuereinheit so konfiguriert ist, dass sie den Betriebszustand des Hauptschalters in einen Ausschaltzustand steuert, wenn sich mindestens eine der Vielzahl von Türen im geöffneten Zustand befindet.

5. Energiespeichersystem mit erhöhter Sicherheit nach Anspruch 2, wobei, wenn der Batteriebehälter in einer Vielzahl bereitgestellt ist, die Hauptleitung und eine Vielzahl von Teilleitungen so konfiguriert sind, dass sie eine Stromleitung bilden, indem die Teilleitungen in Reihe geschaltet werden, und
wobei die Hauptsteuereinheit so konfiguriert ist, dass sie den Betriebszustand des Hauptschalters in einen Ausschaltzustand steuert, wenn sich die Tür von mindestens einem der Vielzahl von Batteriebehältern in einem geöffneten Zustand befindet.

6. Energiespeichersystem mit erhöhter Sicherheit nach einem der Ansprüche 1 bis 5, wobei der Batteriebehälter ferner einen Unterschalter (250) enthält, der zwischen der Teilleitung und der Batterieeinheit angeschlossen und so konfiguriert ist, dass sein Betriebszustand durch die Untersteuereinheit gesteuert wird.

7. Energiespeichersystem mit erhöhter Sicherheit nach Anspruch 6, wobei die Untersteuereinheit so konfiguriert ist, dass sie den Betriebszustand des Unterschalters basierend auf dem bestimmten geöffneten/geschlossenen Zustand steuert.

8. Energiespeichersystem mit erhöhter Sicherheit nach Anspruch 7, wobei die Untersteuereinheit konfiguriert ist zum:
• Blockieren der Verbindung zwischen der Teilleitung und der Batterieeinheit durch Steuern des Betriebszustands des Unterschalters in einen Ausschaltzustand, wenn sich die Tür im geöffneten Zustand befindet, und
• Verbinden der Teilleitung und der Batterieeinheit durch Steuern des Betriebszustands des Unterschalters in einen Einschaltzustand, wenn sich die Tür im geschlossenen Zustand befindet.

9. Energiespeichersystem mit erhöhter Sicherheit nach Anspruch 1, ferner umfassend: eine Sammelschiene (300), deren eines Ende und deren anderes Ende jeweils mit der Hauptleitung und der Teilleitung verbunden sind und die so konfiguriert ist, dass sie den Steuerbehälter und den Batteriebehälter elektrisch verbindet.

10. Energiespeichersystem mit erhöhter Sicherheit nach Anspruch 1, ferner umfassend: ein Kabel (400), dessen eines Ende und dessen anderes Ende jeweils mit der Hauptsteuereinheit und der Untersteuereinheit verbunden sind und das so konfiguriert ist, dass es die Hauptsteuereinheit und die Untersteuereinheit so verbindet, dass eine Kommunikation möglich ist.

## Revendications

1. Un système de stockage d'énergie (10) à sécurité améliorée, comprenant :
un conteneur de contrôle (100) comprenant une ligne principale (110) ; un commutateur principal (120) configuré pour être connecté à la ligne principale ; et une unité de contrôle principale (130) configurée pour contrôler l'état de fonctionnement du commutateur principal ; et
un conteneur de batterie (200) comprenant une sous-ligne (210) configurée pour être connectée électriquement à la ligne principale ; une unité de batterie (220) configurée pour être connectée à la sous-ligne ; une porte (260) ; une unité de détection (230) configurée pour détecter si la porte (260) est ouverte ou fermée ; et une sous-unité de contrôle (240) configurée pour déterminer un état ouvert/fermé de la porte sur la base d'un signal de détection reçu depuis l'unité de détection et transmettre l'état ouvert/fermé déterminé à l'unité de contrôle principale,
dans lequel l'unité de contrôle principale est configurée pour contrôler l'état de fonctionnement du commutateur principal sur la base de l'état ouvert/fermé déterminé de la porte.

2. Le système de stockage d'énergie à sécurité améliorée selon la revendication 1, dans lequel l'unité de contrôle principale est configurée pour :
bloquer la connexion entre la ligne principale et la sous-ligne en commandant l'état de fonctionnement du commutateur principal vers un état d'arrêt, lorsque la porte est à l'état ouvert, et
connecter la ligne principale et la sous-ligne en contrôlant l'état de fonctionnement du commutateur principal vers un état de marche, lorsque la porte est à l'état fermé.

3. Le système de stockage d'énergie à sécurité améliorée selon la revendication 2, dans lequel le conteneur de batterie est configuré pour comporter une pluralité de portes, et dans lequel l'unité de détection est configurée pour détecter si chacune de la pluralité de portes est ouverte ou fermée.

4. Le système de stockage d'énergie à sécurité améliorée selon la revendication 3, dans lequel l'unité de contrôle principale est configurée pour contrôler l'état de fonctionnement du commutateur principal vers un état d'arrêt, lorsqu'au moins l'une de la pluralité de portes est à l'état ouvert.

5. Le système de stockage d'énergie à sécurité améliorée selon la revendication 2, dans lequel, lorsque qu'une pluralité de conteneurs de batterie est prévue, la ligne principale et une pluralité de sous-lignes sont configurées pour former une seule ligne d'alimentation en connectant les sous-lignes en série, et
dans lequel l'unité de contrôle principale est configurée pour contrôler l'état de fonctionnement du commutateur principal vers un état d'arrêt, lorsque la porte d'au moins l'un de la pluralité de conteneurs de batterie est à l'état ouvert.

6. Le système de stockage d'énergie à sécurité améliorée selon l'une quelconque des revendications 1 à 5, dans lequel le conteneur de batterie comprend en outre un sous-commutateur (250) connecté entre la sous-ligne et l'unité de batterie et configuré de telle sorte que son état de fonctionnement est commandé par la sous-unité de contrôle.

7. Le système de stockage d'énergie à sécurité améliorée selon la revendication 6, dans lequel la sous-unité de contrôle est configurée pour contrôler l'état de fonctionnement du sous-commutateur sur la base de l'état ouvert/fermé déterminé.

8. Le système de stockage d'énergie à sécurité améliorée selon la revendication 7, dans lequel la sous-unité de contrôle est configurée pour :
bloquer la connexion entre la sous-ligne et l'unité de batterie en commandant l'état de fonctionnement du sous-commutateur vers un état d'arrêt, lorsque la porte est à l'état ouvert, et
connecter la sous-ligne et l'unité de batterie en commandant l'état de fonctionnement du sous-commutateur vers un état de marche, lorsque la porte est à l'état fermé.

9. Le système de stockage d'énergie à sécurité améliorée selon la revendication 1, comprenant en outre :
une barre omnibus (300) présentant une extrémité et l'autre extrémité connectées à la ligne principale et à la sous-ligne, respectivement, et configurée pour connecter électriquement le conteneur de contrôle et le conteneur de batterie.

10. Le système de stockage d'énergie à sécurité améliorée selon la revendication 1, comprenant en outre : un câble (400) présentant une extrémité et l'autre extrémité connectées à l'unité de contrôle principale et à la sous-unité de contrôle, respectivement, et configuré pour connecter l'unité de contrôle principale et la sous-unité de contrôle de manière à permettre une communication.
